# EUROPEAN PATENT APPLICATION

(11) **EP 3 002 077 A1**
(43) Date of publication of application: **06.04.2016**
(21) Application number: 14460129.1
(22) Date of filing: 19.12.2014
(51) Int. Cl.: B23K 20/02, B23K 20/16, B23K 20/227, B23K 20/24, B23K 20/26, C21D 9/50, B23K 101/06, B23K 101/10, B23K 103/04

(54) **Method of welding pipes made of stainless steel in hard phase**

(30) Priority: 08.09.2014 PL 40940514
(71) Applicant: "NewTech" Sp. z o.o., 41-500 Chorzow (PL)
(72) Inventor: Gubarev, Aleksandr, 443068 Samara (RU); Chabior, Roman, 40-031 Katowice (PL); Slapek, Stanislaw, 40-115 Katowice (PL); Iudakov, Vladimir, 443029 Samara (RU)
(74) Representative: Ziolkowska, Urszula

(57) **Abstract**

The method of welding pipes made of stainless steel in a hard phase, wherein, in the first stage, the preliminary preferably mechanical processing of the front surfaces of pipes by the help of the cutter is made, in the second stage, the front surfaces of metal pipes are covered with hydrocarbons preferably liquid or in the form of pastes and gels, which protect against oxidation, and then their faces are connected, previously centring, preferably by applying a compressive force 1-8 kg, and next the contact areas are heated up by loop inductor made by the size of pipe to achieve a temperature of about 0.75 to 0.90 of temperature of melting point of the metal, wherein the loop inductor is placed in the contact area with backlash from 4 mm to 25 mm relative to the shape of pipe, after finishing the process of welding, the contact area cools off preferably to the temperature of 300 °C-500 °C, next the additional heating of contact area by the loop inductor is made, to the temperature of normalisation of the type of steel of pipes, then the heating is turned off and the clamp is removed.

## Description

The presented invention is the method of welding pipes made of stainless steel in hard phase.

From the polish patent no. 286195 is well-known a method of automatic matching of current to the welding speed in the process of continuous welding of pipe with the use of inductive welding machine of high-frequency and unit for automatic matching of current to the welding speed in the process of continuous welding of pipe with the use of inductive welding machine of high-frequency. The method according to the invention consists in determining the initial current value for the speed of the pipe V = 0, and determining the final current value for the speed of the pipe V = max. In the definite electric amplitude range, the signal of the speed of the pipe is entered in the continuous way, which is converted to electric signals of automatic matching of current to the welding speed. It is made with the help of the range according to the invention which consists of frequency-voltage converter, block of amplitude corrector, block of non-linear functor and block of thermal inertia corrector. Moreover, block of amplitude corrector and, summing block are connected to potentiometers R1 and R2.

From the polish patent no. 354163 is well-known a method of resistance point welding of metal elements on tuck. A method of resistance point welding of metal elements on tuck consists in the axial rotation of the electrodes which is used and / or rotation of the elements welded to the tuck at the time of clamping of electrodes and before the proper welding phase.

From the polish patent no. 392009 is well-known a method of resistance point welding of metal elements on tuck. The method of resistance point welding of metal elements on tuck with the modulation of current consists in the selection of its value, so that the at the beginning of welding, current has the initial value lower by at least 30% of the constant value of main current and the time of initial flow of welding current in the range of 10-15% of the total welding time, wherein the time of the initial current flow is determined depending on the type of welded material so that the amount of heat that is emitted at the place of contact of welded elements during welding must be greater than the heat emitted during welding with current of value of main current and the time which is the sum of the time of initial and main current flow. The value of current intensity of welding is determined depending on the type of material of welded elements. A smaller value of current intensity at the beginning of welding increases the total resistance value of the contact and in the contact area of welded elements, wherein the resistance of these areas depends on the temperature in these areas, arid the time of disappearance of resistance in the contact increases to two times against the nominal parameters, and it is determined on the 20% of the total welding time in relation to the nominal time conditions of disappearance in the contact area, which is 10% of the total welding time.

From the polish patent no. 319475 is well-known a device for front welding of pipes made of thermoplastic material. A device for front welding of pipes made of thermoplastic material has base with a surface of placing on the working table, first, a front linear guide and placed behind it, a second linear guide for rider, owing to which at least two coaxial grips of pipes are movable relative to each other. The flat plane for the endings of pipes is placed along the third linear guide, which is renewable for heating element for softening the endings of pipes. In order to shorten the length of the arms, formed by the grip of pipes and to ease servicing, the second linear guide is located at a greater distance from the surface of placing than the first, the front linear guide. Preferably, the base of machine below the linear guide and the path of the movement of rider has the top wall, which is lying below the side walls and falling toward the front.

From the international patent application no. WO 2014/048885 A2 is well- known auxiliary welding for connecting parts consisting of screws having a head, a shank and a tip. The auxiliary welding of connecting parts driven by a mechanical means of thermal placing of components, which are made of weldable or poorly weldable material. Deformation occurs at the welding head during using the vehicle and as a result of mechanical deformations, so that the component can be connected by welding the connecting portion further auxiliary parts made of heat-sealable material, by welding.

From the international patent publication no. WO 98/13166 is well-known diffusion welding of metals by clamp, according to the invention the CRES pattern is used by applying increased pressure in the areas assigned for the diffusion bond, to increase quality of bonding and to reduce the processing time. CRES pattern is a model corresponding to the DB super-plastic fittings unit.

From the international patent no. WO 2012/093959 A1 is well-known an invention referring to a method of pipe welding by weldable polymer material, where the pipe has the endings and muff made of polymeric material, muff is placed on the tuck at the endings of pipes, muff is welded to the endings of pipes by placing electric conductor tape, which is so permeable for melted material between pipe and muff that power supply ( DC PU PU-AC )is connected with a set by feeder cable, and current is provided in order to heat the tape, in surrounded polymer material, so that it melts around a set in order to create weld, the initial temperature of weld surroundings T0 is measured before warming up the heating set so that voltage UL and the electric current IL supplied to the set, are measured so that initial resistance R0 of the line is calculated before the set warms up so that the electric current supplied to the set causes the increase of resistance R which is calculated on the basis of measured voltage and current.

From the international patent application no. WO 2013/152752 A1 is well-known a device for connecting the pipe endings, which are already smoothed, and which are made of steel, in particular by front welding process by weld, which is created by the pipe endings and tools, which can be moved to a welded connection in orbital way for welding and control of weld joint. The device consists of base plates, which can be placed on both sides of the pipe endings in the area of the welding place and which can be rigidly placed to the pipe endings. The base plates have circular recess with a radial opening for moving the pipes which are to be welded in order to centrally locate the pipes in the recess.

The purpose of the invention is developing new technology of nano-welding pipes made of stainless steel in hard phase.

The method according to the invention, characteristic in that, in the first stage, the preliminary preferably mechanical processing of the front surfaces of pipes by the help of the cutter is made, in the second stage, the front surfaces of metal pipes are covered with hydrocarbons preferably liquid or in the form of pastes and gels, which protect against oxidation, and then their faces are connected, previously centring, preferably by applying a compressive force 1-8 kg, and next the contact areas are heated up by loop inductor made by the size of pipe to achieve a temperature of about 0.75 to 0.90 of temperature of melting point of the metal, wherein the loop inductor is placed in the contact area with backlash from 4 mm to 25 mm relative to the shape of pipe, after finishing the process of welding, the contact area cools off preferably to the temperature of 300 °C-500 °C, next the additional heating of contact area by the loop inductor is made, to the temperature of normalisation of the type of steel of pipes, then the heating is turned off and the clamp is removed.

As pipes, the pipes made of stainless and alloy steel are used.

As hydrocarbons, the hydrocarbons in liquid, gel or pastes such as glycerol or epoxy resin, are used.

During the welding process, the pressure forces do not increase. It is achieved by cutting tooling, placed in the hydraulic system of the technological line for welding pipes, preferably in the form of a cut-out

The mechanical processing of pipes is made by a cutter.

As loop inductor, the elementary inductor is used.

As the loop inductor, the divisible inductor preferably which can be divided for 2 or 4 parts, is used.

As the loop inductor, the inductor having circular or multi-angle form of transverse section, is used.

The advantages of the invention:
1. Durable quality of the welded connections correspond to the quality of basic metal of pipes,
2. No crock,
3. Considerable reduction of labour costs due to the possibility of abandonment of mechanical processing of weld (the removal of crock),
4. Extremely short welding time of one contact, not exceeding 1 minute,
5. A significant increase in the exploitation of pipes,
6. Increasing environmental safety.

A method according to the invention can be used for welding pipes in the machine-building, oil, gas, chemical and power industry.

The solution according to the invention is described in the following examples.

### An example

Two pipes with the diameter of 219, 1 mm, made of 15X5M, were welded.

In the first stage, the preliminary preferably mechanical processing of the front urfaces of pipes by the help of the cutter is made.

In the second stage, the front surfaces of metal pipes are covered with hydrocarbons- with glycerol in the form of gel, which protect against oxidation. Then their faces are connected, previously centring, by applying a compressive force of 6 kg, and next the contact areas are heated up by loop inductor made by the size of pipe to achieve a temperature of about 80 of temperature of melting point of the metal. The loop inductor with circular section is placed in the contact area with backlash 5 mm relative to the shape of pipe. After finishing the process of welding, the heating by the loop inductor is turned off, the contact area cools off to the temperature of 400 °C, next the additional heating of contact area by the loop inductor is made, to the temperature of normalisation of the type of steel of pipes, then the heating is turned off and the clamp is removed.

## Claims

1. The method of welding pipes made of stainless steel in a hard phase using the diffusion process of welding metals with pressure force and simultaneous heating, characteristic in that, in the first stage, the preliminary preferably mechanical processing of the front surfaces of pipes by the help of the cutter is made, in the second stage, the front surfaces of metal pipes are covered with hydrocarbons preferably liquid or in the form of pastes and gels, which protect against oxidation, and then their faces are connected, previously centring, preferably by applying a compressive force 1-8 kg, and next the contact areas are heated up by loop inductor made by the size of pipe to achieve a temperature of about 0.75 to 0.90 of temperature of melting point of the metal, wherein the loop inductor is placed in the contact area with backlash from 4 mm to 25 mm relative to the shape of pipe, after finishing the process of welding, the contact area cools off preferably to the temperature of 300 °C-500 °C, next the additional heating of contact area by the loop inductor is made, to the temperature of normalisation of the type of steel of pipes, then the heating is turned off and the clamp is removed.

2. The method according to claim 1, characteristic in that, as pipes, the pipes made of stainless and alloy steel are used.

3. The method according to claim 1, characteristic in that, as hydrocarbons, the hydrocarbons in liquid, gel or pastes such as glycerol or epoxy resin, are used.

4. The method according to claim 1, characteristic in that, during the welding process, the pressure forces do not increase. It is achieved by cutting tooling, placed in the hydraulic system of the technological line for welding pipes, preferably in the form of a cut-out.

5. The method according to claim 1, characteristic in that, the mechanical processing of pipes is made by a cutter.

6. The method according to claim 1, characteristic in that, as loop inductor, the elementary inductor is used.

7. The method according to claim 1, characteristic in that, as the loop inductor, the divisible inductor preferably which can be divided for 2 or 4 parts, is used.

8. The method according to claim 1, characteristic in that, as the loop inductor, the inductor having circular or multi-angle form of transverse section, is used.
